# EUROPÄISCHE PATENTANMELDUNG

(11) **EP 1 559 473 A1**
(43) Veröffentlichungstag der Anmeldung: **03.08.2005**
(21) Anmeldenummer: 05000662.6
(22) Anmeldetag: 08.11.1999
(51) Int. Cl.: B01F 5/06, B01F 3/04, A23L 2/54

(54) **Anordnung zum Mischen einer Flüssigkeit mit einem Gas**

(30) Priorität: 08.11.1998 DE 19851360
(62) Teilanmeldung aus: 99957962.6
(71) Anmelder: Spiegel, Pasquale, 21509 Glinde (DE)
(72) Erfinder: Spiegel, Margret, 21509 Glinde (DE)
(74) Vertreter: Heldt, Gert, Dr. Dipl.-Ing.

(57) **Zusammenfassung**

Anordnung zum Mischen von Flüssigkeit mit einem Gas in einem Mischer, in der der Mischer Mischelemente enthält, die kugelkegel- oder zylinderförmig ausgebildet sind und für die Versorgung des Mischers (2) mit Flüssigkeit und Gas eine Festeinstellung dieser Stoffe vorgesehen ist.

## Beschreibung

Die Erfindung betrifft eine Anordnung zum Mischen von Flüssigkeit mit einem Gas in einem Mischer, der jeweils einen Anschluß für eine Gaseinspeisung und eine Flüssigkeitseinspeisung sowie eine Entnahme für die mit Gas gemischte Flüssigkeit aufweist und zwischen den Anschlüssen für die Gaseinspeisung und die Flüssigkeitseinspeisung einerseits und der Entnahme für die mit Gas gemischte Flüssigkeit andererseits von der Flüssigkeit und dem Gas durchströmbar ist.

Bekanntlich ist CO² als Zusatz zu einer Flüssigkeit, insbesondere zu Wasser, in der Lage, den gegenwärtig so beliebten Eindruck der Frische eines Getränks hervorzurufen. Ein CO²-Zusatz kann außerdem schales oder abgestandenes oder mit Desinfektionsmitteln versetztes Wasser geschmacklich verbessern. Daher wird Wasser (mit oder ohne Mineralstoffen) in Flaschen oder sonstigen Behältern mit CO² versetzt, das unter Druck in die Flüssigkeit eingebracht und z. B. von sogenannten CO²-Patronen abgegeben wird. Der Kauf von mit CO² versetztem Wasser in Flaschen ist wegen der damit verbundenen Transporte umständlich und teuer. Die bisher benutzte Selbstherstellung von mit CO² versetzten Getränken ist ebenfalls umständlich, weil das CO²-Gas im Innenraum von Druckbehältern in das Wasser eingebracht werden muß und innerhalb der Druckbehälter unter Druck verbleibt.

Die der Erfindung zugrundeliegende Aufgabe besteht daher darin, mit CO² versetzte Flüssigkeiten, insbesondere Wasser, leicht und kontinuierlich herstellen zu können, wobei der CO²-Verbrauch sich nach der Menge des zugeführten und abgezapften Wassers richtet.

Die Lösung gemäß der Erfindung besteht darin, dass der Mischer Mischelemente enthält, die kugel-, kegel- oder zylinderförmig ausgebildet sind, und dass für die Versorgung des Mischers mit Flüssigkeit und Gas eine Festeinstellung dieser Stoffe vorgesehen ist.

Mit einem derartigen Mischer können Getränke, insbesondere Wasser und Mineralwasser, aber auch Erfrischungsgetränke wie Limonade, Obstsäfte und mit anderen Geschmacksstoffen versetzte Flüssigkeiten carbonisiert, das heißt, mit CO² (Kohlendioxid) versetzt werden, so dass sie in der Lage sind, den gegenwärtig so beliebten Eindruck der Frische hervorzurufen.

Eine bevorzugte Ausführungsform der Erfindung besteht darin, dass der Mischer in einem Rohr angeordnet ist. Dieses ist relativ billig und kann schnell mit den kugel-, kegel- und zylinderförmigen Mischelementen des Mischers befüllt werden.

Gemäß einer weiteren bevorzugten Ausführungsform der Erfindung besteht das Rohr aus einem Stück.

Gemäß einer weiteren bevorzugten Ausführungsform der Erfindung besteht das Rohr aus mehreren Teilen. Je nach Verwendung des Mischers in einer Anordnung zum Mischen von Flüssigkeit kann ein aus einem Teil oder aus mehreren Teilen bestehender Mischer Verwendung finden. Jeder der notwendigen Teile ist gleich oder ähnlich wie die übrigen Teile aufgebaut. Gas und Flüssigkeiten können sowohl mit einem einteiligen als auch mit einem mehrteiligen Mischer in gleicher Qualität gemischt werden.

Gemäß einer weiteren bevorzugten Ausführungsform der Erfindung sind an dem Rohr die Anschlüsse für die Gasversorgung und die Flüssigkeitsversorgung sowie die Entnahme der mit dem Gas gemischten Flüssigkeit befestigt. Auf diese Weise finden die einzelnen Anschlüsse einen festen Halt und beeinträchtigen nicht die Wirksamkeit des Mischers.

Gemäß einer weiteren bevorzugten Ausführungsform der Erfindung weist das Rohr eine Anschlußmöglichkeit für Geschmacksstoffe auf. Auf diese Weise können dem entstehenden Gas-Flüssigkeitsgemisch auch Geschmacksstoffe hinzugemischt werden.

Gemäß einer weiteren bevorzugten Ausführungsform der Erfindung sind in dem Rohr Befestigungsmöglichkeiten für den Mischer integriert. Auf diese Weise ist dafür gesorgt, dass im Betrieb des Mischers keine Mischelemente aus dem Rohr herausgespült werden können.

Gemäß einer weiteren bevorzugten Ausführungsform der Erfindung ist an dem Anschluß für die Gasversorgung eine mit einem Gasbehälter verbundene Gasleitung vorgesehen. Diese ermöglicht eine unmittelbare Gasversorgung des Mischers mit dem Gasbehälter, so dass bei der Versorgung mit Gas keine Schwierigkeiten auftreten können.

Gemäß einer weiteren bevorzugten Ausführungsform der Erfindung ist für die Versorgung des Mischers mit Flüssigkeit und Gas eine Festeinstellung dieser Stoffe zur Herbeiführung einer kontinuierlichen Mischung vorgesehen. Diese kann je nach Wunsch so eingestellt werden, dass entweder viel oder wenig Gas in die Flüssigkeit eingebracht wird.

Gemäß einer weiteren bevorzugten Ausführungsform der Erfindung ist das Rohr mit dem Mischer in einem industriell genutzten Getränkebereiter eingebaut. Dabei bewährt sich der Mischer auch im Dauereinsatz bei großen Flüssigkeits- und Gasmengen.

Gemäß einer weiteren bevorzugten Ausführungsform der Erfindung ist das Rohr mit dem Mischer in einen Getränkeautomaten zur Herstellung von Erfrischungsgetränken und / oder alkoholischen Getränken eingebaut. Auf diese Weise können auch aus Getränkeautomaten frisch gemischte Getränke entnommen werden.

Gemäß einer weiteren bevorzugten Ausführungsform der Erfindung weist der Mischer nur einen geringen Gegendruck auf. Dieser reicht aus, um eine intensive Vermischung von Gas und Flüssigkeit im Bereich der kugel-, kegel- und zylinderförmigen Mischelemente herbeizuführen.

Gemäß einer weiteren bevorzugten Ausführungsform der Erfindung besteht das Rohr aus VA-Stahl. Dieser besitzt die beim Mischen von Gas und Wasser notwendige Festigkeit.

Gemäß einer weiteren bevorzugten Ausführungsform der Erfindung besteht das Rohr aus Kunststoff. Dieses besitzt den Vorzug, auch bei hohen Gasanteilen resistent gegen schädliche Einflüsse zu sein.

Gemäß einer weiteren bevorzugten Ausführungsform der Erfindung ist der Mischer in ein System integriert, um Sodawasser über ein Zapfventil zu entnehmen. Dadurch kann der Mischer auch in Haushaltsanlagen Verwendung finden, bei denen das Sodawasser aus einem üblichen Zapfventil gezapft werden kann.

Gemäß einer weiteren bevorzugten Ausführungsform der Erfindung ist der Mischer in ein System integriert, um Sodawasser über eine Mischbatterie zu zapfen. Auch diese Möglichkeit, Sodawasser über eine Mischbatterie zu zapfen, erleichtert ihre Einbringung in eine Haushaltsanlage.

Weitere Einzelheiten der Erfindung ergeben sich aus der nachfolgenden ausführlichen Beschreibung eines Ausführungsbeispieles. In den Zeichnungen zeigen:

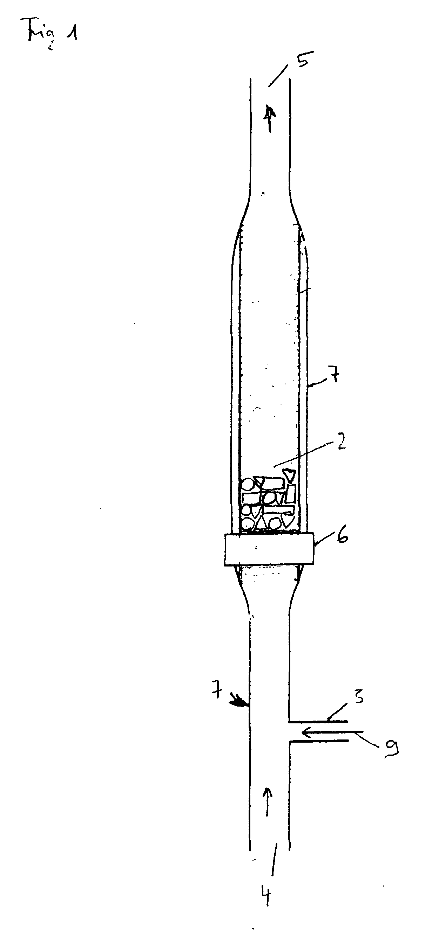

- Fig. 1:: Einen Längsschnitt durch einen in ein Rohr eingebauten Mischer mit Anschlußmöglichkeiten

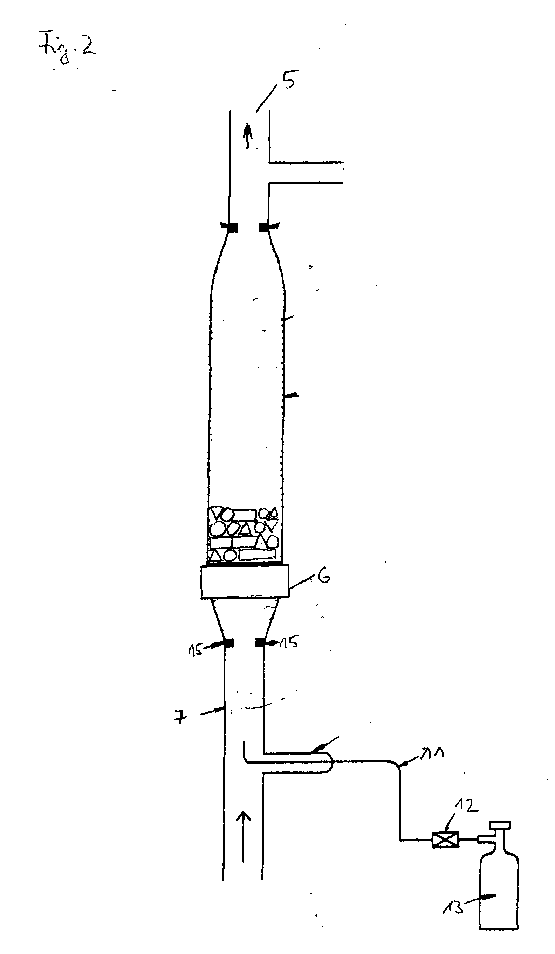

- Fig. 2:: Einen weiteren Längsschnitt durch einen in ein Rohr eingebauten Mischer mit Zuleitung für Flüssigkeit, Gas und Geschmacksstoffe

Ein Mischer 2 besteht aus mehreren Mischelementen, die kugel-, kegel- oder zylinderförmig ausgebildet sind. Dieser Mischer 2 ist in ein Rohr 7 eingesetzt, das über eine Anschlußmöglichkeit 3 für eine Gasversorgung und eine Flüssigkeitseinspeisung 4 verfügt. Die Anschlußmöglichkeit 3 für die Gasversorgung ist über eine Gasleitung 11 mit einem Gasbehältnis 13 verbunden. In der Gasleitung 11 ist eine Gasbehältnisanschlußmöglichkeit 12 eingebaut, die eine Möglichkeit vorsieht, lizenzierte Gasbehältnisse 13 mit der Gasleitung 11 zu verbinden.

Die als Kugeln, Kegel oder Zylinder ausgebildeten Mischelemente liegen aneinander und füllen das Rohr 7 zwischen Festsetzungspunkten 15 im Bereich einer Anschlußmöglichkeit 6 und einem Austritt 5 aus. Der Mischer 2 ist über die Festsetzungspunkte 15 in dem Rohr 7 befestigt. Nachdem das Flüssigkeits-Gasgemisch den Mischer 2 verlassen hat, tritt es aus dem Austritt 5 aus dem Rohr 7 aus. Dabei ist die Länge des Rohres 7 so bemessen, dass das Gas-Flüssigkeitsgemisch beim Durchströmen des Rohres 7 ausreichend Zeit für eine Reaktion besitzt. Im Bereich des Austritts 5 wird das Rohr 7 mit dem gewünschten Einsetzungsbereich des Mischers 2 verbunden, beispielsweise mit einem Zapfventil oder einer Mischbatterie zum Zapfen von Sodawasser, oder einem Getränkeautomaten oder einer Reinigungsmaschine oder an einer in der Landwirtschaft oder im Gartenbau eingesetzten Bewässerungsanlage oder in einer Waschmaschine.

Zur Herstellung von Erfrischungsgetränken kann das Flüssigkeits-Gasgemisch mit Geschmacksstoffen angereichert werden. Diese werden über eine Einspeisungsmöglichkeit 10 beispielsweise in das aus dem Mischer 2 austretende Flüssigkeits-Gasgemisch eingeleitet. Es ist jedoch auch möglich, die Einspeisungsmöglichkeit 10 vor Eintritt des Flüssigkeits-Gasgemisches in den Mischer 2 im Rohr 7 vorzusehen. In diesem Fall werden die Geschmacksstoffe gemeinsam mit dem Flüssigkeits-Gasgemisch durch den Mischer 2 in Richtung auf den Auslaß 5 durchgeleitet.

Damit läuft der Mischvorgang zum Mischen von Flüssigkeiten mit Gasen wie folgt ab. Vor Eintritt in den Mischer 2 wird eine Flüssigkeitseinspeisung 4 an einer Gaseinspeisung 9 mit Gas angereichert, das aus einem Gasbehältnis 13 über eine Gasleitung 11 in die Anschlußmöglichkeit für Gas 3 eingeleitet wird. Aus dem Gas und der Flüssigkeit bildet sich ein Gemisch, das in den Mischer 2 eingeleitet und dort kräftig vermischt wird. Das im Mischer 2 intensiv durchgemischte Flüssigkeits-Gasgemisch wird ggf. an der Einspeisung 10 für Geschmacksstoffe vorbeigeleitet und dort mit Geschmacksstoffen angereichert. Sodann tritt das hergestellte Gemisch aus dem Austritt 5 aus, der zu diesem Zweck mit dem gewünschten Einsetzungsbereich verbunden ist, in dem das Flüssigkeits-Gasgemisch eingesetzt w-rden soll.

## Patentansprüche

1. Anordnung zum Mischen von Flüssigkeit mit einem Gas in einem Mischer (2), der jeweils einem Anschluß (3) für eine Gaseinspeisung (9) und eine Flüssigkeitseinspeisung (4) sowie eine Entnahme (5) für die mit Gas gemischte Flüssigkeit aufweist und zwischen den Anschlüssen für die Gaseinspeisung (9) und die Flüssigkeitseinspeisung (4) einerseits und der Entnahme (5) für die mit Gas gemischte Flüssigkeit andererseits von der Flüssigkeit und dem Gas durchströmbar ist, **dadurch gekennzeichnet, dass** der Mischer (2) Mischelemente enthält, die kugel-, kegel- oder zylinderförmig ausgebildet sind und dass für die Versorgung des Mischers (2) mit Flüssigkeit und Gas eine Festeinstellung dieser Stoffe vorgesehen ist.

2. Anordnung nach Anspruch 1, **dadurch gekennzeichnet, dass** der Mischer (2) in einem Rohr (7) angeordnet ist.

3. Anordnung nach Anspruch 2, **dadurch gekennzeichnet, dass** das Rohr (7) aus einem Stück besteht.

4. Anordnung nach Anspruch 2, **dadurch gekennzeichnet, dass** das Rohr (7) aus mehreren Teilen besteht.

5. Anordnung nach einem oder mehreren der vorhergehenden Ansprüche, **dadurch gekennzeichnet, dass** an dem Rohr (7) die Anschlüsse für die Gasversorgung (9) und die Flüssigkeitsversorgung (4) sowie die Entnahme (5) der mit Gas gemischten Flüssigkeit befestigt sind.

6. Anordnung nach einem oder mehreren der vorhergehenden Ansprüche, **dadurch gekennzeichnet, dass** das Rohr (7) eine Anschlußmöglichkeit (10) für Geschmacksstoffe aufweist.

7. Anordnung nach einem oder mehreren der vorhergehenden Ansprüche, **dadurch gekennzeichnet, dass** in dem Rohr (7) Befestigungsmöglichkeiten (15) für den Mischer (2) integriert sind.

8. Anordnung nach einem oder mehreren der vorhergehenden Ansprüche, **dadurch gekennzeichnet, dass** an dem Anschluß (3) für die Gasversorgung (9) eine mit einem Gasbehälter (13) verbundene Gasleitung (11) vorgesehen ist.

9. Anordnung nach einem oder mehreren der vorhergehenden Ansprüche, **dadurch gekennzeichnet, dass** das Rohr (7) mit dem Mischer (2) in einem industriell genutzten Getränkebereiter eingebaut ist.

10. Anordnung nach einem oder mehreren der vorhergehenden Ansprüche, **dadurch gekennzeichnet, dass** das Rohr (7) mit dem Mischer (2) in einem Getränkeautomaten zur Herstellung von Erfrischungsgetränken und alkoholischen Getränken eingebaut ist.

11. Anordnung nach einem oder mehreren der vorhergehenden Ansprüche, **dadurch gekennzeichnet, dass** der Mischer (2) nur einen geringen Gegendruck aufweist.

12. Anordnung nach einem oder mehreren der vorhergehenden Ansprüche, **dadurch gekennzeichnet, dass** das Rohr (7) aus VA-Stahl besteht.

13. Anordnung nach einem oder mehreren der vorhergehenden Ansprüche 1 bis 12, **dadurch gekennzeichnet, dass** das Rohr (7) aus Kunststoff besteht.

14. Anordnung nach einem oder mehreren der vorhergehenden Ansprüche, **dadurch gekennzeichnet, dass** der Mischer (2) in ein System integriert ist, um Sodawasser über ein Zapfventil zu entnehmen.

15. Anordnung nach einem oder mehreren der vorhergehenden Ansprüche, **dadurch gekennzeichnet, dass** der Mischer (2) in ein System integriert ist, um Sodawasser über eine Mischbatterie zu zapfen.
